# EUROPEAN PATENT APPLICATION

(11) **EP 4 520 172 A1**
(43) Date of publication of application: **12.03.2025**
(21) Application number: 24020276.2
(22) Date of filing: 29.08.2024
(51) Int. Cl.: A01N 59/20, A01P 1/00, C01B 32/182

(54) **METHOD OF OBTAINING BIOCIDAL GRAPHENE NANOPLATELETS**

(30) Priority: 31.08.2023 PL 44597623
(71) Applicant: Uniwersytet Mikolaja Kopernika w Toruniu, 87-100 Torun (PL)
(72) Inventor: Ilnicka, Anna, 87-100 Torun (PL); Kamedulski, Piotr, 87-800 Wloclawek (PL); ?ukaszewicz, Jerzy P., 87-100 Torun (PL); Szczenpanek, Joanna, 87-148 Lysomice (PL); Skorza, Wiktoria, 26-617 Radom (PL); Wilska, Ewelina, 87-100 Torun (PL)

(57) **Abstract**

The method of obtaining biocidal graphene nanoplatelets is characterized in that acetic acid is added to distilled water in the appropriate amount to prepare 1% acetic acid solution, chitosan is added and stirred until it is completely dissolved, next the 0.1 M Cu(NO₃)₂ · 3 H₂O solution is added and left on the magnetic stirrer, next graphene is added and heated in the temperature range from 40 to 100°C preferably 80°C in the oxygen-free atmosphere preferably nitrogen atmosphere until water evaporates and the thus prepared mass is subject to the carbonization process in the inert gas N₂ flow, and heated to the temperature range from 500 to 800°C at the heating rate from 5 to 20°C/min preferably 10°C/min until the temperature in the range from 500 to 800°C is reached and heating is continued for 30 to 120 minutes preferably 60 minutes and cooled.

## Description

The subject of the invention is a method of obtaining biocidal graphene nanoplatelets with a stable arranged porous three-dimensional structure.

Over the past years, the whole of society has been adversely affected by the lack of efficient protection against infections. As a result, COVID-19 spread over all the continents, causing the death of many people and bringing about permanent side effects in others. The existing solutions in the field of personal protective equipment without biocidal properties i.e.:
- non-medical face masks,
- surgical face masks (called medical or treatment masks),
- respiratory masks with and without valves (filtering face pieces, FFP),
- masks with activated carbon filters, filters with activated carbon for masks,
- graphene face masks.

Masks with biocidal properties, if commercially available, contain silver compounds. The products available on the Polish market neither show their compliance with the European standards nor inform about research that would evidence their conformity with the declared characteristics. Their functionality is ascribed to the commonly acknowledged properties of silver. Another type of masks with biocidal properties is that with iodopovidone, and this type is patented and compliant with the European standards. They show efficiency for 48 h and their use is restricted by a number of contraindications.

Non-medical facial masks are typically made of cotton fabric, including linen, and they include from one to three layers. The possibility of individual preparation and relatively low production cost are their advantages, and the fabric prevents the transfer of droplets by infected people (and only in such a case it is a solution better than lack of protection (A. Davies, K.A. Moseley, K. Giri, G. Kafatos, J. Walker, A. Bennett, (2013). Testing the Efficacy of Homemade Masks: Would They Protect in an Influenza Pandemic?. Disaster medicine and public health preparedness. 7. 413-418. 10.1017/dmp.2013.43. (https://www.researchgate.net/publication/ 258525804_Testing_the_Efficacy_of_Homemade_Masks_Would_They_Protect_in_ an_Influenza_Pandemic)

In turn, the inconveniences connected with non-medical face masks involve usually poor filtration, retention of moisture, low effectiveness of protection against infections, or even raising the risk of infection, and lack of biocidal properties (C.R. MacIntyre, H. Seale, T. Chi Dung, N. Tran Hien, P. Thi Nga, A. A. Chughtai, B. Rahman, D.E. Dwyer, Q. Wang, A cluster randomised trial of cloth masks compared with medical masks in healthcare workers, BMJ Journals, Open Access https:// bmjopen.bmj.com/content/5/4/e006577 2015 (20.09.2022), K. Krzyzak, K.E. Kościelecka, A.J. Kuć, D.M. Kubik, T. M 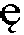 cik-Kronenberg, Maseczki - ochrona czy zagrozenie? Analiza postaw spolecznych wobec nakazu zakrywania ust i nosa w czasie pandemii COVID-19 https://wiadlek.pl/wp-content/uploads/archive/ 2020/ WLek202008110.pdf DOI: 10.36740/WLek202008110; In a First, Randomized Study Shows That Masks Reduce COVID-19 Infections, https:// insights, som. yale.edu/insights/in-first-randomized-study-shows-that-masks-reduce-covid-19-infections).

Surgical masks are composed of a few kinds of fabric. The inner layer of the mask which remains in contact with the mouth and nose absorbs moisture and is colored white. The outer blue colored layer prevents spraying of the liquid. Both, the internal and the external layer can be made of cotton or other types of fabric. In order to capture small particles, the middle layer is predominantly made of polypropylene, i.e. the polymer produced from crude oil. Its fibers are electrically charged, which allows the attraction of particles during the air flow. They are equipped with the nose clip.

The advantages of the surgical masks cover their compliance with the European standard - EN 14683:2014, according to which the minimum bacterial filtration efficiency (BFE) is 95%. Medical staff members use type II which are characterized by filtration efficiency above 98%, or type IIR, which are additionally percolation-resistant. They are recommended for use by medical staff, and they are relatively cheap (unless availability is an issue).

The drawbacks of surgical masks. The research developed by scientists from Stanford and Yale Universities proved that in the examined area the level of infections was generally 11% lower, 23% lower among people aged from 50 to 60, and almost 35% lower among people aged 60 or more¹. The obtained efficiency result is far from expected. The service life for one mask is up to 4 h and there are no biocidal properties.

Respirator masks with valves are characterized by the conical construction due to which free space is formed between the mouth and the nose, and the mask surface. It facilitates breathing and speaking. Additionally, breathing is easier owing to the built-in valve. From the inside, the air passes through a membrane and is removed; from the outside, the air passes through a filter the purpose of which is to stop viruses and bacteria. Nonwoven polypropylene fabric is most commonly used for the production of mask. The mask is equipped with a nose clip.

The advantages of the respiratory masks with the valves:
- They are classified as personal protective equipment (PPE) because they provide protection against inhaling pollutants in the form of bigger or smaller droplets to individuals wearing them.
- high protection efficiency for people wearing mask, i.e. at the level of 99% for FFP3, and for FFP2 - 95%.
- They meet the requirements of the European standard: EN 149:2001+A1:2009.

The drawbacks of the respiratory masks with the valves:
- They do not provide protection to the surroundings; even if worn, they do not prevent against releasing particles resulting from breathing to the environment.
- They give up to 8 h long protection, in comparison to previous masks it can be an advantage
- They exhibit no biocidal properties.

The respiratory masks without the FFP2 i FFP3 valves most often include the layer which stays in contact with the mouth and nose and which is made of soft nonwoven fabric, comfortable to wear. Another layer includes hygroscopic material which enables controlling moisture and is percolation-resistant. There are also two layers made of nonwoven polypropylene medical fabric which capture the smallest particles. The function of the outer layer is to prevent the permeation of bigger particles. Masks of such type are also equipped with the nose clip.

The advantages of the respiratory masks without the valves:
- The efficiency of protection for a person wearing mask, i.e. on the level of 98% for FFP2 i FFP3.
- The efficiency of protection for the surroundings i.e. on the level of 95% for FFP3, and 80% for FFP2.
- They meet the requirements of the European standard: EN 149:2001+A1:2009.

The drawbacks of the respiratory masks without the valves:
- They give up to 8 h long protection, but in comparison to surgical masks and fabric masks it can be an advantage.
- They present no biocidal properties.

A gas mask with an activated carbon filter is made of rubber and a synthetic material, where TPE (i.e. thermoplastic rubber) is the basic material, and polypropylene is the supporting material. With regard to the subject of the report, the replaceable refill for this kind of masks is particularly interesting as it is composed of a cylindrical container filled with sorptive material based on activated carbon.

The advantages of the gas masks with activated carbon filters:
- Protection category III, i.e. 99.95% filtration efficiency - they are applied to protect against solid and liquid particles characterized by high toxicity, for which TLV<0.05mg/m³.
- Compliance with the H&S standards: EN 14387:2004 + A1:2008 (PN-EN 14387:2004 +A1:2008).
- Long service life of mask: only the filter is replaceable.
- Activated carbon has pores in which adsorption of the chemical impurities from gases and liquids takes place.

The drawbacks of the gas masks with activated carbon filters:
- It is difficult to estimate their service life because it depends on humidity and temperature in the surrounding air, the level of the arduousness of working conditions, the concentration of vapour or gas in the air, and the kind of vapour or gas
- They present no biocidal properties
- The price of the filter itself is around 38 PLN
- The filters do not eliminate germs; if the remains of viruses are collected on them, the waste masks can become the source of infections and cause secondary transmission or cross infections, especially when they are disposed of improperly.

The activated carbon refill for masks usually has outer layers made of polypropylene filtering nonwoven fabric, the one internal layer is made of medical polypropylene nonwoven fabric, the other layer is the filter with activated carbon. Usually, no information about the carbon origin is provided. The refills can be used with cotton masks or placed in the anti-smog masks with valves (in the case of the conically shaped models with side openings for the valves).

The advantages of the mask refills with activated carbon:
- According to the given information, filters level of filtration is ≥95%.
- The filter for the anti-smog masks have been examined by the Central Institute for Labour Protection - National Research Institute (CIOP) for particulate matter PM2.5 and PM10 (smog).

The drawbacks of masks refills with activated carbon:
- They present no biocidal properties.
- The majority of available products does not show confirmation of compliance with standards.
- Their service life is up to 8 h.

A mask with graphene is usually made up of one layer of medical polypropylene nonwoven fabric, one graphene layer which provides bacteriostatic properties, and next the buffer filter protecting the graphene filter against the effects of breathing, the layer by the face resistant to denting as well as delicate and made of polypropylene nonwoven fabric. Adjustment and attachment to the nose by the clamp.

The advantages of the graphene masks:
- The BFE (bacterial filtration efficiency) is equal or greater than 94%.
- The mask classified as PPE (white) is in the FFP2 protection class according to EN 149:2001+A1:2009 - PPE. The blue-grey (so-called medical) mask meets the EN14683:2019 standard.

The drawbacks of the graphene masks:
- Service time is up to 8h.
- No biocidal properties have been confirmed.

Biocidal masks with silver are masks with silver ions which are usually knitted fabric masks (made of microfiber, spun bamboo viscose) with deposited silver ions. The example: the 4F mask (right: https://4f.com.pl), the Raypath mask (left: https:// www.nanosilver-technology.com/product-page/nano-cosmetic-mask)

The advantages of the masks with silver ions:
- They are reusable (and washable).
- They are antibacterial.

The drawbacks of the masks with silver ions:.
- Lack of information about research that would confirm their efficiency
- Lack of information about compliance with standards
- They are recommended for healthy people (protection from touching the face and mucous membrane with the hands which could previously touch contaminated surfaces).
- There is a notice that they do not give 100% protection; there is no information about the protection level.

Biocidal masks with iodopovidone are those in which iodopovidone, an antiseptic and disinfectant agent, is the active substance. It is composed of three layers, including one produced with the use of nano technology. Example: Inventi mask, https://inventimask.com/

The advantages of the masks with iodopovidone:
- They show bactericidal and viricidal properties.
- They present 48 h (for medical masks) / 72 h for FFP2 usage and they can be taken off.
- Their properties are confirmed by tests, Polish Patent Office nr P.436477.
- Medical masks are made in compliance with the European standards for antiviral textile products, EN 14683:2019+AC:2019 and ISO 18184
- They are FFP2 masks

The drawbacks of the masks with iodopovidone:
- They smudge when they get in contact with moisture or water (rain).
- The contraindications for their use: hypersensitivity to iodine compounds, hyperactivity or other symptomatic thyroid gland diseases, functional kidney disorders, dermatitis herpetiformis also known as Duhring's disease. Not to be worn before and after treatment with the use of radioactive iodine isotope. They are not recommended for children below the age of 12 and pregnant or breastfeeding women.

Biocidal masks with copper, copper oxide are three-layered masks in which two outer layers contain the accelerated copper oxide, and the inner layer is the filter made of nano fibers. Example: RESPILON VK RespiRaptor FFP2 (https:// www.respilon.com)

The advantages of the masks with copper:
- They are characterized by high biocidal efficiency.
- They can be used for 168 h.
- They are certified FFP2 respirators made in compliance with the EN 149:2001+A1:2009 standard.

The drawbacks of the masks with copper:
- They are expensive (about 75 PLN for 2 pieces).

Copper and zinc biocidal masks are made up of four layers of nonwoven fabric. A copper and zinc alloy is sprayed all over the second layer forming a thin membrane. The membrane is obtained using the gas-phase deposition method. Example: Yamato Shinku-Kougyo (https://vamatoshinku.com/s/products/detail/1)

The advantages of the masks with copper and zinc:
- They are characterized by high biocidal efficiency.
- Their efficiency was tested.
- They compliance with the Japanese industrial standard, JIS T 9001, medical mask of the cat. III).

The drawbacks of the biocidal masks with copper and zinc:
- They are single-use masks
- They are not available on the European market
- They do not comply with the European standards

Silver and copper biocidal masks are made up of polypropylene and zeolite material with nano silver and nano copper (researchers from The National Autonomous University of Mexico, UNAM, (CN212754359U)).

The advantages of the biocidal masks with copper:
- They are characterized by high biocidal efficiency.
- The cost of materials is relatively low, i.e. copper vs silver, e.g. nitrates.
- They may be used multiply up to 10 washes.

The drawbacks of the biocidal face masks with copper
- The UNAM silver and copper masks show lower efficiency than the presented version of copper and zinc ones.
- There is no information about their compliance with the European standards.

The aim of the invention is to develop a method of obtaining biocidal graphene nanoplatelets characterized by a stable and arranged to porous three-dimensional structure which will be applicable in products, particularly in masks protecting the human respiratory tract.

The subject of the invention is the method of obtaining biocidal graphene nanoplatelets characterized in that acetic acid is added to distilled water in the appropriate amount to prepare 1% acetic acid solution, chitosan is added and stirred until it is completely dissolved, next the 0.1 M Cu(NO₃)₂ · 3 H₂O solution is added and left on the magnetic stirrer, next graphene is added and heated in the temperature range from 40 to 100°C preferably 80°C in the oxygen-free atmosphere preferably nitrogen atmosphere until water evaporates and the thus prepared mass is subject to the carbonization process in the N₂ (inert gas) flow and the mass is heated to the temperature range from 500 to 800°C at the heating rate from 5 to 20°C/min preferably 10°C/min until the temperature in the range from 500 to 800°C is reached and heating is continued for 30 to 120 minutes preferably 60 minutes and the mass is cooled. Preferably the amount of acetic acid is 5 ml per each 400 ml of distilled water, the amount of chitosan is 2.5 g, the amount of the Cu(NO₃)₂ · 3 H₂O solution is 25 ml, and the amount of graphene is 2.5 g. Preferably the molar mass of the Cu(NO₃)₂ · 3 H₂O solution is from 0.01 to 0.2 preferably 0.1 M or 0.025 M or 0.0125 M. Preferably the solution is left on the magnetic stirrer for the period of 30 to 120 minutes preferably 60 minutes. Preferably cooling is continued until the temperature in the range from 16 to 24°C is reached.

The existing solutions show significant gaps in the biocidal function of carbon materials used as filter materials in masks protecting the human respiratory tract.

Typically, carbon filter materials are capable of capturing toxic molecules from the air taken in by humans for breathing, they are capable of doing so due to the extensive surface area resulting from the existence of meso- and micropores and functional groups (containing heteroatoms, e.g. oxygen, nitrogen, sulfur, metal ions, metal clusters) on the carbon surface.

The effect of the invention consists in the combined use of a porous carbon matrix in the form of graphene nanoplatelets permanently transformed into a three-dimensional structure, in which the formation of pores is based on obtaining free spaces between differently oriented graphene nanoplatelets and the introduction of copper ions at the oxidation level +1/+2 onto the surface of such a 3D nanoplatelets structure. The deposition and fixation of the +1/+2 copper ions present on the surface results from using chitosan as a so-called carbon glue which stabilizes the three-dimensional structure of carbon nanoplatelets. Chitosan used to glue graphene nanoplatelets is subject to thermal decomposition (pyrolysis), and after pyrolysis it turns into an amorphous carbon material enriched with nitrogen atoms which chemically bind copper ions at all the above-mentioned oxidation states. All the three key preparative steps necessary to prepare the biocidal carbon filter material (using graphene nanoplatelets as building blocks of the porous carbon structure, using chitosan as the material for gluing graphene flakes, using +1/+2 copper ions as biocidal centers) are applied together in one synthesis process.

The method of producing filtering materials applicable in protective masks is distinguished by the materials used, i.e. graphene powder. 3D graphene, i.e. the so-called three-dimensional graphene roses, is characterized by i.a. high adsorption of pollutants. Graphene has an advantage over activated carbon in terms of hydrophobicity and chemical stability, i.e. it is not subject to spontaneous oxidation, which means it does not create favorable conditions for bacterial growth. Additionally, the introduction of copper ions makes the conditions toxic for bacteria.

In comparison to previous products, e.g. those containing copper, the advantage resulting from the combination of the biocidal function with high adsorption of pollutants by 3D graphene makes the difference. Combining a unique technology of preparing three-dimensional graphene roses and depositing copper on them results in developing an innovative technology which protects against both bacteria and other air pollutants.

The invention is illustrated in examples which do not exhaust solutions according to the invention.

### Example I.

5 ml of acetic acid were added to 400 ml of distilled water to obtain 1% acetic acid solution to which 2.5 g of chitosan were added. The mixture was stirred until chitosan was completely dissolved. Next, 25 ml of the 0.1 M Cu(NO₃)₂ · 3 H₂O solution were added and the mixture was left on the magnetic stirrer for the period of 1 h. In the next step, 2.5 g of commercially available graphene were added and the mixture was heated to the temperature of 80°C until the excess of water evaporated. The thus prepared mass was subject to the carbonization process in the flow of N₂ inert gas and heated to 800°C at the heating rate of 10°C/min in the nitrogen atmosphere. When the set temperature was reached, the mass was heated for 1 h and then cooled to room temperature.

As a result, according to the method used, CHCu0.1_800 containing copper compounds built into the structure of carbon obtained from chitosan and graphene was obtained.

### Example II

5 ml of acetic acid were added to 400 ml of distilled water to obtain 1% acetic acid solution to which 2.5 g of chitosan were added. The mixture was stirred until chitosan was completely dissolved. Next, 25 ml of the 0.025 M Cu(NO₃)₂ · 3 H₂O solution were added and the mixture was left on the magnetic stirrer for the period of 1 h. In the next step, 2.5 g of commercially available graphene were added and the mixture was heated to the temperature of 80°C until the excess of water evaporated. The thus prepared mass was subject to the carbonization process in the flow of N₂ inert gas and heated to 800°C at the heating rate of 10°C/min in the nitrogen atmosphere. When the set temperature was reached, the mass was heated for 1 h and then cooled to room temperature.

As a result, according to the method used, CHCu0.025_800 containing copper compounds built into the structure of carbon obtained from chitosan and graphene was obtained.

### Example III

5 ml of acetic acid were added to 400 ml of distilled water to obtain 1% acetic acid solution and 2.5 g of chitosan were added. The mixture was stirred until chitosan was completely dissolved. Next, 25 ml of the 0.0125 M Cu(NO₃)₂ · 3 H₂O solution were added and the mixture was left on the magnetic stirrer for the period of 1 h. In the next step, 2.5 g of commercially available graphene were added and the mixture was heated to the temperature of 80°C until the excess of water evaporated. The thus prepared mass was subject to the carbonization process in the flow of N₂ inert gas and heated to 800°C at the heating rate of 10°C/min in the nitrogen atmosphere. When the set temperature was reached, the mass was heated for 1 h and then cooled to room temperature.

As a result, according to the method used, CHCu0.0125_800 containing copper compounds built into the structure of carbon obtained from chitosan and graphene was obtained.

## Claims

1. The method of obtaining biocidal graphene nanoplatelets **characterized in that** acetic acid is added to distilled water in the appropriate amount to prepare 1% acetic acid solution, next chitosan is added and stirred until it is completely dissolved, next the 0.1 M Cu(NO₃)₂ · 3 H₂O solution is added and left on the magnetic stirrer, next graphene is added and heated in the temperature range from 40 to 100°C preferably 80°C in the oxygen-free atmosphere preferably nitrogen atmosphere until water evaporates and the thus prepared mass is subject to the carbonization process in the inert gas N₂ flow and heated to the temperature range from 500 to 800°C at the heating rate from 5 to 20°C/min preferably 10°C/min until the temperature in the range from 500 to 800°C is reached and heating is continued for 30 to 120 minutes preferably 60 minutes and cooled.

2. Method according to claim 1 **characterized in that** the amount of acetic acid is 5 ml per each 400 ml of distilled water, the amount of chitosan is 2.5 g, the amount of the Cu(NO₃)₂ · 3 H₂O solution is 25 ml, and the amount of graphene is 2.5 g.

3. Method according to claim 1 or 2 **characterized in that** the molar mass of the Cu(NO₃)₂ · 3 H₂O solution is from 0.01 to 0.2 preferably 0.1 M or 0.025 M or 0.0125 M.

4. Method according to claim 1, 2 or 3 **characterized in that** the solution is left on the magnetic stirrer for the period of 30 to 120 minutes preferably 60 minutes.

5. Method according to claim 1, 2 , 3or 4 **characterized in that** cooling is continued until the temperature in the range from 16 to 24°C is reached.
